# EUROPÄISCHE PATENTANMELDUNG

(11) **EP 4 763 759 A1**
(43) Veröffentlichungstag der Anmeldung: **24.06.2026**
(21) Anmeldenummer: 25223407.5
(22) Anmeldetag: 15.12.2025
(51) Int. Cl.: B65G 47/86, B65G 54/02, B65G 29/00

(54) **VORRICHTUNG UND VERFAHREN ZUM TRANSPORTIEREN VON OBJEKTEN**

(30) Priorität: 17.12.2024 DE 102024138290
(71) Anmelder: Krones AG, 93073 Neutraubling (DE)
(72) Erfinder: KIENDL, Thomas, 93073 Neutraubling (DE); KIESLINGER, Manfred, 93073 Neutraubling (DE); MAYER, Wolfgang, 93073 Neutraubling (DE); ELSPERGER, Stefan, 93073 Neutraubling (DE); NEUBAUER, Michael, 93073 Neutraubling (DE)
(74) Vertreter: v. Bezold & Partner Patentanwälte - PartG mbB

(57) **Zusammenfassung**

Die Erfindung betrifft u.a. eine Vorrichtung (10) zum Transportieren von Objekten (12). Die Vorrichtung (10) weist mehrere Magnetkraftsegmente (36) auf, die nebeneinander auf einer geschlossenen Bahnkurve angeordnet sind. Die Vorrichtung (10) weist mehrere Bewegungseinrichtungen (38) auf, die jeweils einen Objekthalter (44) zum Halten eines Objekts (12) und eine Magnetkrafteinheit (40) zum magnetischen Wechselwirken mit den mehreren Magnetkraftsegmenten (36) zum Antreiben der jeweiligen Bewegungseinrichtung (38) aufweisen. Die Magnetkrafteinheiten (40) sind jeweils außenliegend zu der geschlossenen Bahnkurve zum Bewegen auf einem umlaufenden Antriebspfad (A) angeordnet. Die Objekthalter (44) sind jeweils angeordnet zum Transportieren der gehaltenen Objekte (12) auf einem Transportpfad (T) innenliegend von dem umlaufenden Antriebspfad (A).

## Beschreibung

### Technisches Gebiet

Die Erfindung betrifft eine Vorrichtung und ein Verfahren zum Transportieren von Objekten, vorzugsweise Behältern.

### Technischer Hintergrund

In einer Behälterbehandlungsanlage können Behälter behandelt und zwischen den einzelnen Anlagenteilen transportiert werden. Zum Transportieren der Behälter sind eine Vielzahl an Techniken bekannt. Eine bekannte Transporttechnik umfasst beispielsweise Langstator-Linearmotor-Antriebe zum Antreiben von Bewegungseinrichtungen (Shuttles), die die Behälter transportieren.

Denkbar ist bspw. ein LLM-Transportstern mit einzelnen, kreisförmig angeordneten Langstatorsegmenten. Beispielsweise kann der LLM-Transportstern einen flexiblen Behältereinlauf bei einer nachfolgend angeordneten Maschine ermöglichen.

Herkömmlich werden die zu transportierenden Objekte bei solchen Shuttle-Systemen an der Motorsegment-Außenseite oder aber oberhalb bzw. unterhalb des jeweiligen Shuttles geführt.

In diesem Zusammenhang wird bspw. auf die DE 10 2015 203 042 A1, die DE 10 2017 01 331 A1 und die DE 10 2019 110 056 A1 hingewiesen.

Nachteilig an bekannten Systemen kann sein, dass, bedingt durch bspw. die notwendige Shuttlebreite und motorische Systemgrenzen, die einzelnen Bewegungseinrichtungen (Shuttles) insbesondere bei höheren Geschwindigkeiten nicht vollständig bzw. nah genug zusammenfahren können (z. B. wegen Kollisionsvermeidung, zu hohe Shuttledichte, Segmentbelastung). Dies hat zur Folge, dass die zu transportierenden Objekte nicht lückenlos einlaufen und von den Bewegungseinrichtungen übernommen werden können. Auch der Teilkreis-Durchmesser, auf dem sich die Bewegungseinrichtungen bewegen, ist fix und kann wenig an die Folgemaschine angepasst werden. Um diese Systembeschränkungen zu berücksichtigen, müssen die zu transportierenden Objekte bspw. auf einen Mindestabstand vor dem Einlaufen gebracht werden. Die Realisierung des benötigten Mindestabstands ist in der Praxis nur mit großem Aufwand und auch einhergehenden Nachteilen zu realisieren (z. B. Verwendung einer Riemenstation, Kettenüberschübe etc.). Ein weiterer signifikanter Nachteil kann sich dadurch ergeben, dass der definiert erzeugte Mindestabstand zwischen den Objekten beim Einlaufen auch wieder verloren gehen kann, z. B. in Crashsituationen, Kontakt zu den Führungen, anderweitig verrutschte Objekte. Die Prozesssicherheit ist deshalb nicht optimal.

Der Erfindung liegt die Aufgabe zu Grunde, eine verbesserte Technik zum Transportieren von Objekten, vorzugsweise Behältern, zu schaffen. Bevorzugt sollen zumindest einige der oben genannten Nachteile überwunden werden. Vorzugsweise soll die Technik einen Objekttransport mit einer Übernahme der Objekte aus einem lückenlosen oder zumindest annähernd lückenlosen Objektstrom ermöglichen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine Vorrichtung, vorzugsweise Transportstern, zum Transportieren von Objekten, vorzugsweise Behältern. Die Vorrichtung weist mehrere (z. B. stationäre) (z. B. Elektro-) Magnetkraftsegmente, vorzugsweise Langstatorsegmente, auf. Die mehreren Magnetkraftsegmente sind nebeneinander auf einer geschlossenen, vorzugsweise (z. B. kreis-) ringförmigen oder ovalen, Bahnkurve angeordnet. Die Vorrichtung weist mehrere Bewegungseinrichtungen auf, die jeweils einen (z. B. aktiven oder passiven) Objekthalter (z. B. Behälterhalter) zum Halten eines Objekts und eine (z. B. Permanent-) Magnetkrafteinheit zum magnetischen Wechselwirken mit den mehreren Magnetkraftsegmenten zum Antreiben der jeweiligen Bewegungseinrichtung aufweisen. Die Magnetkrafteinheiten sind jeweils außenliegend zu der geschlossenen Bahnkurve zum Bewegen auf einem umlaufenden Antriebspfad angeordnet. Die Objekthalter sind jeweils angeordnet zum Transportieren der gehaltenen Objekte auf einem Transportpfad innenliegend von dem umlaufenden Antriebspfad.

Vorteilhaft wird bei der Vorrichtung der üblicherweise außenliegende Transportpfad der Objekte nach innen gelegt, nämlich innenliegend von dem Antriebspfad. Hierdurch lässt sich sozusagen das Übersetzungsverhältnis "Objekt zu nötigem Bewegungseinrichtungsabstand" positiv beeinflussen. Durch den nach innen gelegten Transportpfad bzw. Objektteilkreis kann sich vorteilhaft für jeden einlaufenden Objektabstand gemäß dem Übersetzungsverhältnis ein entsprechender Bewegungseinrichtungsabstand ergeben. Dieser ist nun jedoch vorteilhaft größer als der eigentliche Objektabstand. Dadurch ist es möglich, Objekte aufzunehmen, die mit einem deutlich geringeren Teilungsabstand einlaufen, u.a. auch kleine Objekte / Behälter ohne Lücken. Allgemein ausgedrückt kann die Vorrichtung ermöglichen, dass sich die Objekthalter, mit deren Hilfe die Objekte transportiert werden, auf einen kleineren Teilungsabstand annähern können, als es der Teilungsabstand der Magneteinheiten herkömmlich zulässt. Vorteilhaft kann mit der Vorrichtung ebenfalls eine Komplexität einer Wiederanfahrlogik nach Crashsituationen (z. B. zusammengeschobene Objekte) deutlich vereinfacht werden, da die Objekte aufgrund fehlender Lücken nur wenig verrutschen können. Vorteilhaft trägt ein nach innen verlegter Transportpfad auch zur Reduzierung der auf die Bewegungseinrichtung wirkenden Massenträgheit bei, was ebenfalls vorteilhaft ist (z. B. geringe Segmentbelastung bei Beschleunigung und Verzögerung).

Bevorzugt sind die mehreren Magnetkraftsegmente bezüglich der geschlossenen Bahnkurve nach außen gewandt, und/oder die mehreren Magnetkrafteinheiten sind hin zu der geschlossenen Bahnkurve gewandt, und/oder die mehreren Magnetkraftsegmente und die Magnetkrafteinheiten liegen einander gegenüber.

Vorzugsweise liegt der Transportpfad auf einem Behälterteilkreis der Vorrichtung. Bevorzugt kann der Antriebspfad die Magnetkraftsegmente außen umlaufen. Vorzugsweise kann der Antriebspfad die geschlossene Bahnkurve umgeben. Beispielsweise können der Transportpfad und der Antriebspfad koaxial zueinander angeordnet sein.

Bevorzugt ist die Vorrichtung frei von weiteren Magnetkraftsegmenten, die außenliegend zu den Magnetkraftsegmenten und/oder den Magnetkrafteinheiten angeordnet sind, z. B. angeordnet auf einer weiteren geschlossenen Bahnkurve, die außen von der geschlossenen Bahnkurve liegt bzw. diese umgibt.

In einem Ausführungsbeispiel sind die mehreren Magnetkrafteinheiten unabhängig voneinander mittels der mehreren Magnetkraftsegmente antreibbar. Vorzugsweise bilden die mehreren Magnetkrafteinheiten und die mehreren Magnetkraftsegmente gemeinsam ein Langstator-Linearmotor-Antriebssystem oder ein Kurzstator-Linearmotor-Antriebssystem oder ein Planarmotor-Antriebssystem (z. B. mit geschlossener Antriebsfläche). Vorteilhaft wird somit ermöglicht, dass die Bewegungsvorrichtungen individuell bewegt werden können.

In einem weiteren Ausführungsbeispiel sind die Objekthalter jeweils innenliegend von mindestens einem von dem umlaufenden Antriebspfad, der geschlossenen Bahnkurve, dem Transportpfad, den mehreren Magnetkrafteinheiten und den mehreren Magnetkraftsegmenten angeordnet. Alternativ oder zusätzlich sind die Objekthalter zum Halten der Objekte nach außen gewandt und/oder die Objekthalter sind (z. B. aktive oder passive) Behälterhalter (z. B. Behälterklammern oder Behälteraufnahmen oder Behältertaschen (Behälterschale)), vorzugsweise zum Halten jeweils eines Behälters an einem Behälterhals des Behälters und/oder an einem Behälterrumpf des Behälters. Vorteilhaft kann damit eine sichere Halterung der Objekte und ein vereinfachter Aufbau der Vorrichtung ermöglicht werden, da insbesondere im Einlaufbereich und im Auslaufbereich Bauraum- und Bewegungsraumkonflikte vermieden werden.

In einer Ausführungsform ist mindestens eines erfüllt von:
- die Objekthalter sind höhenversetzt zu, vorzugsweise oberhalb oder unterhalb von, den Magnetkrafteinheiten und/oder den mehreren Magnetkraftsegmenten angeordnet; und
- der Transportpfad ist höhenversetzt zu, vorzugsweise oberhalb oder unterhalb von, dem umlaufenden Antriebspfad angeordnet.

Vorteilhaft kann der Ansatz der Trennung der Transporthöhe von der Motorhöhe eine besonders einfache und effiziente, konstruktive Umsetzung der Idee des Verlegens des Transportpfads nach innen ermöglichen.

In einer weiteren Ausführungsform weisen die mehreren Bewegungseinrichtungen jeweils eine (z. B. starre) (z. B. Träger-) Verbindungskonstruktion auf, die den Objekthalter der jeweiligen Bewegungseinrichtung und die Magnetkrafteinheit der jeweiligen Bewegungseinrichtung miteinander verbindet.

In einer Ausführungsvariante ist mindestens eines erfüllt von:
- die Verbindungskonstruktion ist zumindest abschnittsweise als Fachwerk ausgeführt;
- der Objekthalter und/oder die Magnetkrafteinheit ist zum Austauschen lösbar an der Verbindungskonstruktion angebracht;
- der Objekthalter und/oder die Magnetkrafteinheit ist höhenverstellbar (z. B. vertikal verschiebbar) mit der Verbindungskonstruktion verbunden, vorzugsweise über eine Vertikalführung und/oder eine Schwalbenschwanzverbindung;
- die Magnetkrafteinheit ist an einem von einem unteren Ende und einem oberen Ende der Verbindungskonstruktion angeordnet, und der Objekthalter ist an dem anderen von dem unteren Ende und dem oberen Ende der Verbindungskonstruktion angeordnet;
- die Verbindungskonstruktion ist mit einer (z. B. innenliegenden) zentralen Führungssäule verbunden, vorzugsweise zum Führen und optional Tragen der jeweiligen Bewegungseinrichtung an der zentralen Führungssäule.

Vorteilhaft kann damit eine leichte, einfache und flexibel an unterschiedliche Anforderungen anpassbare Konstruktion der Bewegungseinrichtungen ermöglicht werden.

In einer weiteren Ausführungsvariante weist die Verbindungskonstruktion ferner einen länglichen Träger, vorzugsweise Vertikalträger, auf. Vorzugsweise ist der längliche Träger innenliegend von dem Transportpfad angeordnet und/oder trägt der längliche Träger den Objekthalter. Optional kann die Verbindungskonstruktion ferner einen (z. B. Fachwerk-) Ausleger aufweisen, der bspw. den länglichen Träger und die Magnetkrafteinheit verbindet und optional die Magnetkrafteinheit an dem länglichen Träger trägt. Vorteilhaft kann die Verbindungskonstruktion auf diese Weise besonders leicht und auf einfache Weise aufgebaut sein.

In einem Ausführungsbeispiel weist die Vorrichtung ferner eine, vorzugsweise stationäre (ortsfeste), Abstützplatte zum bodenseitigen Abstützen der von den Objekthaltern gehaltenen Objekte auf. Vorzugsweise kann die Abstützplatte zwischen den Objekthaltern und den Magnetkraftsegmenten angeordnet sein. Bevorzugt kann die Abstützplatte einen gekrümmten Verlauf aufweisen, der dem Transportpfad folgt. Vorteilhaft kann damit eine Konstruktion der Objekthalter und der Bewegungseinrichtungen wesentlich vereinfacht werden, da diese vorzugsweise nicht das Gewicht der Objekte beim Transport tragen müssen.

In einem weiteren Ausführungsbeispiel weist die Vorrichtung ferner ein Seitenführungselement, vorzugsweise Seitengeländer oder Seitenwand, zum seitlichen Führen der von den Objekthaltern gehaltenen Objekte auf dem Transportpfad auf. Vorzugsweise kann das Seitenführungselement außenliegend von den Objekthaltern und/oder dem Transportpfad angeordnet sein. Bevorzugt kann das Seitenführungselement einen gekrümmten Verlauf aufweisen, der dem Transportpfad folgt. Vorteilhaft kann damit eine Konstruktion der Objekthalter wesentlich vereinfacht werden, da diese vorzugsweise die Objekte beim Transport lediglich anschieben müssen.

In einer Ausführungsform weist die Vorrichtung ferner einen Einlaufförderer auf, der zum Übergeben der Objekte an die mehreren Bewegungseinrichtungen angeordnet ist. Vorzugsweise kann der Einlaufförderer ein Gestell mit einer Ausnehmung aufweisen. Beispielsweise kann die Ausnehmung einen Teil der Magnetkraftsegmente (z. B. brückenförmig) überspannen. Alternativ oder zusätzlich können Abschnitte der Bewegungseinrichtungen (z. B. Abschnitte der Verbindungskonstruktionen, z. B. die Ausleger, und/oder die Magnetkrafteinheiten und/oder deren Gehäuse) im Betrieb der Vorrichtung durch die Ausnehmung bewegbar sein. Vorteilhaft kann somit auf konstruktive einfache Weise ermöglicht werden, dass der Einlaufförderer bis hin zu dem nun innenliegenden Transportpfad verlaufen kann.

In einer weiteren Ausführungsform sind die Magnetkrafteinheiten in einem Gehäuse der jeweiligen Bewegungseinrichtung (z. B. teilweise oder vollständig) aufgenommen. Die Objekthalter und die Gehäuse sind derart dimensioniert, dass bei einem Zusammenfahren benachbarter Bewegungseinrichtungen die Objekthalter und/oder die Objekte einander berühren, während die Gehäuse noch voneinander beabstandet sind. Vorteilhaft kann auf diese Weise ermöglicht werden, dass Objekte aus einem lückenlosen Einlaufstrom übernommen werden können.

In einer Ausführungsvariante sind die mehreren Bewegungseinrichtungen rollenlos und/oder an einer zentralen Führungssäule der Vorrichtung geführt und optional getragen (z. B. über die Verbindungskonstruktion). Alternativ können die mehreren Bewegungseinrichtungen bspw. jeweils mindestens eine Führungsrolle aufweisen, die die jeweilige Bewegungseinrichtung entlang einer umlaufenden Führungsbahn führt und optional trägt. Vorteilhaft kann damit eine sichere und zuverlässige Führung der Bewegungseinrichtungen und damit der Objekthalter und der Magnetkrafteinheiten ermöglicht werden.

In einer weiteren Ausführungsvariante weist die Vorrichtung ferner eine Sperreinrichtung auf, die in einem Einlaufbereich der Vorrichtung angeordnet und wahlweise zum Blockieren (und Aufstauen) oder Freigeben eines Objekteinlaufstroms betätigbar ist (z. B. von einer Verarbeitungseinrichtung der Vorrichtung). Vorzugsweise kann die Sperreinrichtung ein bewegbares (z. B. ein- und ausfahrbares oder ein- und ausschwenkbares) Sperrelement (z. B. Sperrfinger, Sperrstift oder Sperrschranke) zum Blockieren der Objekte des Objekteinlaufstroms aufweisen. Vorteilhaft kann mit der Sperreinrichtung bei Störungen ein Volllaufen des Transportpfads mit Objekten verhindert werden. Stattdessen können die Objekte mittels der Sperreinrichtung auf einem Einlaufförderer aufgestaut werden, bis die Störung behoben ist. Die aufgestauten Objekte können dann nacheinander von den Bewegungseinrichtungen im Einlaufbereich, vorzugsweise lückenlos, übernommen und abtransportiert werden.

In einem Ausführungsbeispiel weist die Vorrichtung ferner eine Verarbeitungseinrichtung auf, die dazu konfiguriert ist, die mehreren Magnetkraftsegmente und/oder Magnetkrafteinheiten derart zu betreiben, dass
- mit den Objekthaltern der mehreren Bewegungseinrichtungen ein lückenloser oder annähernd lückenloser Objekteinlaufstrom übernehmbar ist (z. B. in einem Einlaufbereich der Vorrichtung), und optional
- die Bewegungseinrichtungen einen Abstand benachbarter, transportierter Objekte von einem Einlaufbereich zu einem Auslaufbereich der Vorrichtung vergrößern oder verkleinern, vorzugsweise auf einen vorgegebenen Objektabstand (z. B. gleich einem vorgegebenen Teilungsabstand von Transportelementen eines Auslaufförderers der Vorrichtung).

Vorteilhaft besteht damit auch eine steuerungstechnische Umsetzung der Objektübernahme durch die Bewegungseinrichtungen aus einem lückenlosen Einlaufstrom.

Vorzugsweise kann sich der Begriff "Verarbeitungseinrichtung" auf eine Elektronik (z. B. ausgeführt als eine Treiberschaltung oder mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Die Verarbeitungseinrichtung kann beispielsweise eine Zentralverarbeitungseinrichtung sein oder mehrere dezentral bzw. verteilt angeordnete Verarbeitungseinheiten aufweisen.

Ein weiterer Aspekt betrifft eine Behälterbehandlungsanlage (z. B. zum Temperieren, Herstellen, Reinigen, Beschichten, Prüfen, Rinsen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie). Die Behälterbehandlungsanlage kann die Vorrichtung wie hierin offenbart aufweisen. Die Behälterbehandlungsanlage kann beispielsweise eine Getränkeabfüllanlage sein.

Beispielsweise können die Behälter als Flaschen, Dosen, Kanister, Kartons, Flakons, Phiolen, Tuben usw. ausgeführt sein.

Ein weiterer Aspekt betrifft ein Verfahren zum Transportieren von Objekten, vorzugsweise Behältern und/oder mittels einer Vorrichtung wie hierin offenbart. Das Verfahren weist auf: Transportieren der Objekte auf einem Transportpfad mittels Objekthaltern mehrerer Bewegungseinrichtungen, wobei:
- der Transportpfad innenliegend von einem umlaufenden Antriebspfad angeordnet ist;
- (z. B. Permanent-) Magnetkrafteinheiten der mehreren Bewegungseinrichtungen sich auf dem umlaufenden Antriebspfad bewegen, angetrieben durch magnetische Wechselwirkung mit mehreren (z. B. stationären) (z. B. Elektro- oder Permanent-) Magnetkraftsegmenten (z. B. Langstatorsegmenten), die nebeneinander auf einer geschlossenen (z. B. vorzugsweise (z. B. kreis-) ringförmigen oder ovalen) Bahnkurve angeordnet sind; und
- der umlaufende Antriebspfad außenliegend von der geschlossenen Bahnkurve angeordnet ist (bzw. die geschlossene Bahnkurve umgibt).

Vorteilhaft können mit dem Verfahren die gleichen Vorteile erzielt werden, die hierin bereits unter Bezugnahme auf die Vorrichtung beschrieben sind. Selbiges gilt für die untenstehend erläuterten, bevorzugten Beispiele des Verfahrens.

In einem Ausführungsbeispiel weist das Verfahren ferner mindestens eines auf von:
- Übernehmen der Objekte mittels der Objekthalter der mehreren Bewegungseinrichtungen aus einem lückenlosen oder einem annähernd lückenlosen Objekteinlaufstrom (z. B. Teilstrom eines Gesamtstroms);
- Übergeben der Objekte mittels der Objekthalter der mehreren Bewegungseinrichtungen zu einem Objektauslaufstrom, in dem benachbarte Objekte beabstandet zueinander in einem vorgegebenen Objektabstand positioniert sind;
- Schieben der Objekte während des Transportierens mittels der Objekthalter der mehreren Bewegungseinrichtungen über eine, vorzugsweise gekrümmte, Abstützplatte und/oder entlang eines, vorzugsweise gekrümmten, Seitenführungselements;
- Blockieren eines Objekteinlaufstroms zu den mehreren Bewegungseinrichtungen mittels einer Sperreinrichtung, vorzugsweise bei mindestens einem von: einem Fehler beim Transportieren Übernehmen oder Übergeben; einer Fehlfunktion einer der mehreren Bewegungseinrichtungen; einer Fehlfunktion einer der mehreren Magnetkraftsegmente; einer Fehlfunktion einer Einrichtung zum Behandeln und/oder Transportieren der Objekte, die objektstromabwärts von den mehreren Bewegungseinrichtungen angeordnet ist; einer erfassten Beschädigung eines Objekts; und einer Bedienereingabe.

Es ist auch möglich, dass die Objekte mittels der Objekthalter aus einem Objekteinlaufstrom, der in beliebigen Abständen hintereinander einlaufende Objekte, z. B. Behälter, aufweist, übernommen werden.

Die zuvor beschriebenen bevorzugten Ausführungsformen und Merkmale der Erfindung sind beliebig miteinander kombinierbar. Insbesondere sind alle Merkmale, die in Bezug auf die Vorrichtung beschrieben sind, auch in Kombination mit dem Verfahren anwendbar und beanspruchbar, und umgekehrt.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Prinzipdarstellung einer Vorrichtung zum Transportieren von Objekten gemäß einem Ausführungsbeispiel;
- Figur 2: eine perspektivische Darstellung einer beispielhaften Vorrichtung zum Transportieren von Objekten;
- Figur 3: eine perspektivische Darstellung eines Abschnitts der beispielhaften Vorrichtung von Figur 2;
- Figur 4: eine perspektivische Darstellung eines weiteren Abschnitts der beispielhaften Vorrichtung von Figur 2;
- Figur 5: eine perspektivische Darstellung einer Bewegungseinrichtung der beispielhaften Vorrichtung von Figur 2;
- Figur 6: eine weitere perspektivische Darstellung der Bewegungseinrichtung von Figur 5; und
- Figur 7: eine schematische Darstellung von Antriebspfad und Transportpfad der beispielhaften Vorrichtung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

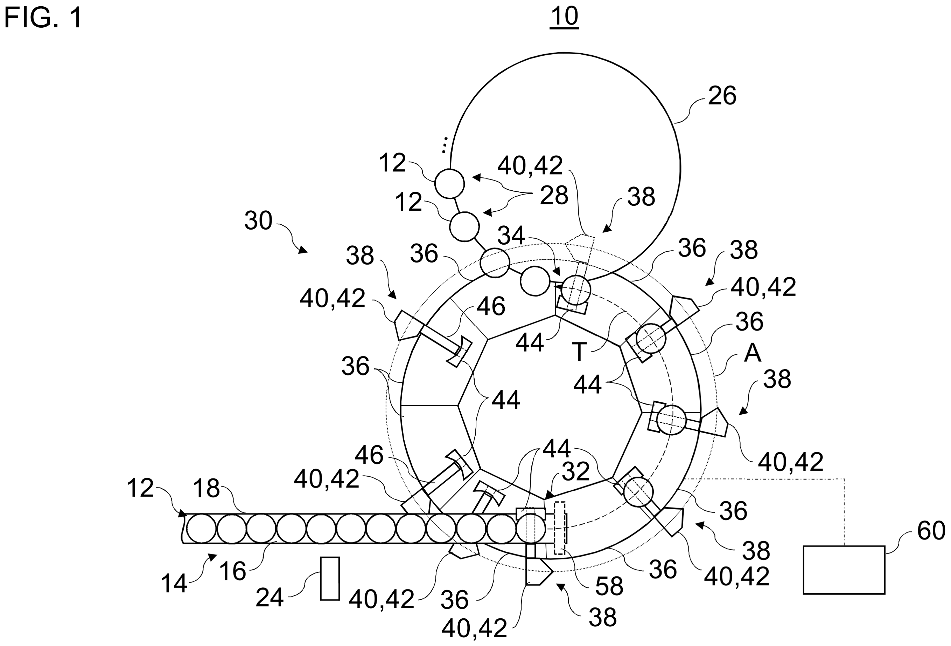

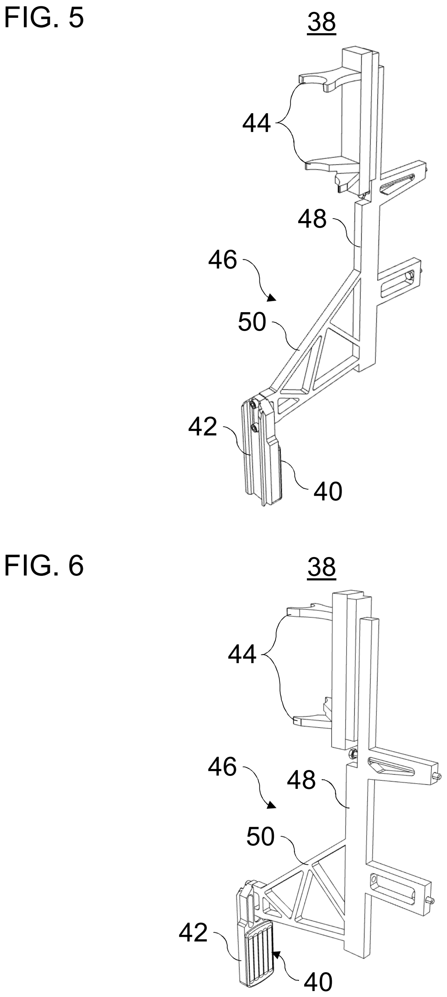

Die Figuren 1 bis 6 zeigen eine Vorrichtung 10 (bzw. Abschnitte davon) zum Transportieren von Objekten (Gegenständen) 12. Bevorzugt sind die Objekte 12 als einzelne Behälter oder Behältergebinde ausgeführt. Besonders bevorzugt ist die Vorrichtung 10 in einer Behälterbehandlungsanlage umfasst.

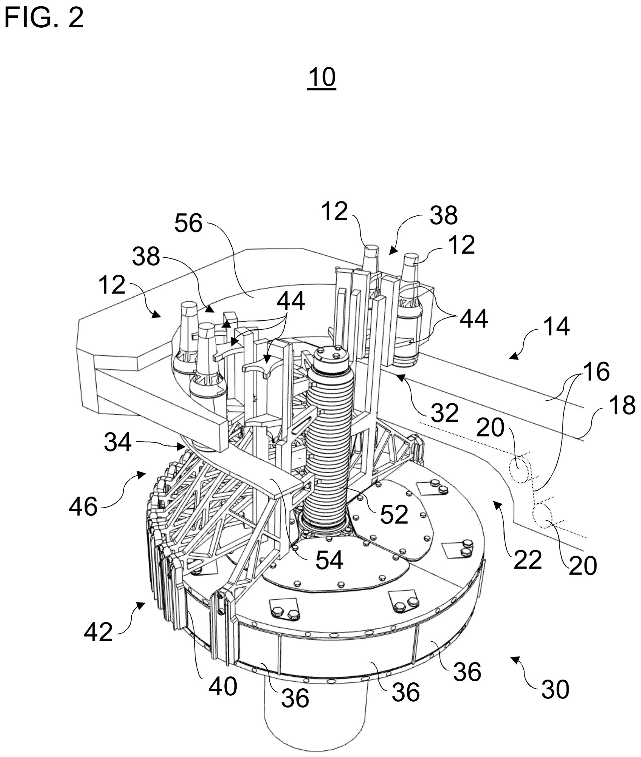

Nachfolgend ist die Vorrichtung 10 unter Bezugnahme auf die Figuren 1 bis 6 näher beschrieben. Die Figur 1 betrifft eine Prinzipdarstellung der Vorrichtung 10. Hingegen betreffen die Figuren 2 bis 6 perspektivische Konstruktionsdarstellungen eines bevorzugten Ausführungsbeispiels der Vorrichtung 10.

Die Vorrichtung 10 weist einen (z. B. Zwischen-) Förderer (Transporteur) 30 mit mehreren Magnetkraftsegmenten 36 und mehreren Bewegungseinrichtungen 38 auf. Optional kann die Vorrichtung 10 ferner bspw. einen Einlaufförderer 14, eine Sensorvorrichtung 24, einen Auslaufförderer 26, eine Sperreinrichtung 58 und/oder eine Verarbeitungseinrichtung 60 aufweisen (siehe Figur 1).

Der Einlaufförderer 14 kann die Objekte 12 zu dem Förderer 30 transportieren.

Der Einlaufförderer 14 kann die Objekte 12 vorzugsweise aufrechtstehend transportieren und/oder bodenseitig abstützen. Bevorzugt kann der Einlaufförderer 14 ein Linearförderer sein. Bevorzugt kann der Einlaufförderer 14 die Objekte 12 in einer Reihe hintereinander transportieren. Der Einlaufförderer 14 ist vorzugsweise einspurig.

Im Einzelnen kann der Einlaufförderer 14 einen Einlaufstrom der Objekte 12 zu einem (Objekt-) Einlaufbereich 32 des Förderer 30 transportieren. Im Objekteinlaufstrom können die Objekte 12 im Wesentlichen lückenlos oder annähernd lückenlos zueinander positioniert sein. Bevorzugt können sich jeweils benachbarte Objekte 12 berühren.

Beispielsweise kann der Einlaufförderer 14 ein umlaufendes Förderelement 16 aufweisen. Das umlaufende Förderelement 16 kann bspw. ein Band, ein Plattenförderelement, ein Mattenförderelement oder ein Kettenförderelement sein.

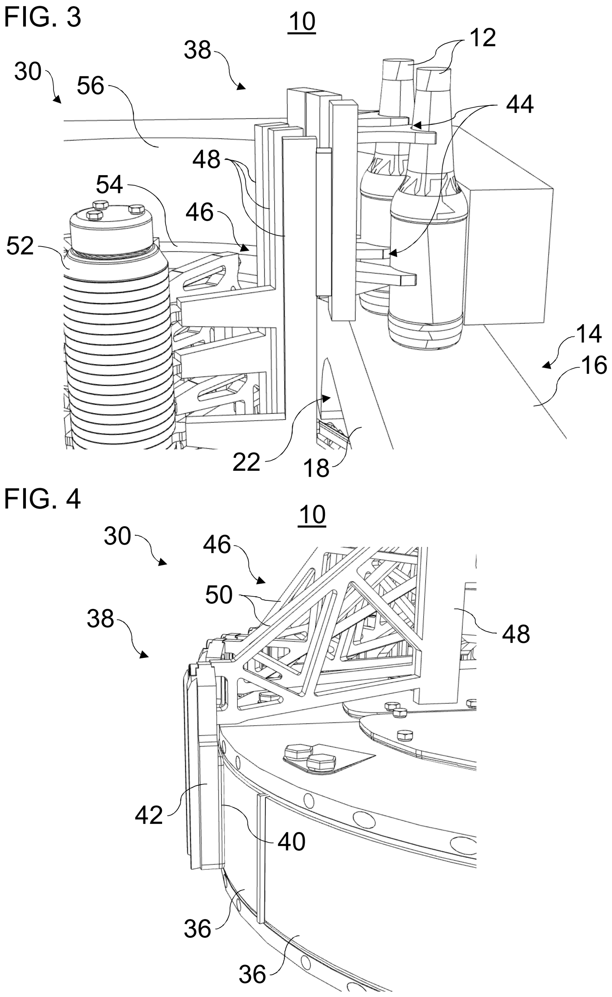

Das umlaufende Förderelement 16 kann bspw. in einem Gestell 18 des Einlaufförderers 14 geführt und angetrieben sein (siehe Figuren 2 und 3). Das Gestell 18 kann offen oder verkleidet sein. Beispielsweise kann das Gestell 18 zu einem geschlossenen Gehäuse, vorzugsweise Förderelement-Kasten (z. B. Kettenkasten), verkleidet sein.

Beispielsweise können in/an dem Gestell 18 ein Antriebsrad und mehrere Umlenkräder 20 drehbar gelagert sein (siehe Figur 2). Das Antriebsrad kann das umlaufende Förderelement 16 zum Fördern der Objekte 12 antreiben und führen. Die Umlenkräder 20 können das umlaufende Förderelement 16 führen, z. B. in Eckbereichen des Gestells 18.

Bevorzugt kann das Gestell 18 des Einlaufförderers 14 eine Ausnehmung 22 zur Anordnung eines Abschnitts des Förderers 30 aufweisen (siehe Figuren 2 und 3). Bevorzugt kann die Ausnehmung 22 in einem Einlaufbereich 32 des Förderers 30 angeordnet sein.

Die Ausnehmung 22 kann einen Abschnitt des Förderers 30 überspannen. Beispielsweise kann die Ausnehmung 22 den Abschnitt des Förderers 30 brückenförmig überspannen. Beispielsweise kann die Ausnehmung 22 einen Teil der Magnetkraftsegmente 36 des Förderers 30 überspannen. Die Ausnehmung 22 kann bspw. im Wesentlichen rechteckförmig sein.

Vorzugsweise kann die Ausnehmung 22 einen Bewegungsraum zum Passieren für Abschnitte der Bewegungseinrichtungen 38 schaffen. Beispielsweise können sich im Betrieb der Vorrichtung 10 die Verbindungskonstruktionen 46 (z. B. deren Ausleger 50 - siehe Figuren 4 bis 6) der Bewegungseinrichtungen 38 durch die Ausnehmung 22 bzw. den durch die Ausnehmung 22 geschaffenen Bewegungsraum bewegen.

Beispielsweise kann mindestens ein Umlenkrad 20 des Einlaufförderers 14 angeordnet sein zum Führen des umlaufenden Förderelements 16 entlang der Ausnehmung 22 bzw. der Ausnehmung 22 folgend (siehe Figur 2).

Bevorzugt kann die Ausnehmung 22 an einem Rückführtrum oder Untertrum des Einlaufförderers 14 angeordnet sein. Besonders bevorzugt kann die Ausnehmung 22 an einem Rückführuntertrum des Einlaufförderers 14 angeordnet sein.

Die Sensorvorrichtung 24 ist nur beispielhaft in Figur 1 dargestellt. Beispielsweise kann die Sensorvorrichtung 24 einen Sensor oder mehrere, voneinander beabstandete Sensoren aufweisen. Die Sensorvorrichtung 24 kann bevorzugt seitlich neben oder direkt über dem Einlaufförderer 14 angeordnet sein.

Die Sensorvorrichtung 24 kann die Objekte 12 des Objekteinlaufstroms erfassen. Bevorzugt kann die Sensorvorrichtung 24 erfassen, wann ein jeweiliges Objekt 12 eine bestimmte Position entlang des Einlaufförderers 14 passiert. Es ist allerdings auch möglich, dass die Sensorvorrichtung 24 bspw. direkt aktuelle Positionen der Objekte 12 erfassen kann oder direkt räumliche und/oder zeitliche Abstände der Objekte 12 zueinander erfassen kann.

Eine Signalausgabe der Sensorvorrichtung 24 bezüglich der erfassten Objekte 12 kann von der Verarbeitungseinrichtung 60 empfangen werden. Abhängig davon kann die Verarbeitungseinrichtung 60 bspw. eine Bewegung der Bewegungseinrichtungen 38 zum Übernehmen der Objekte 12 steuern.

Der Auslaufförderer 26 ist nur beispielhaft in Figur 1 dargestellt. Der Auslaufförderer 26 kann die Objekte 12 von dem Förderer 30 wegtransportieren. Vorzugsweise kann der Auslaufförderer 26 die Objekte 12 in einem (Objekt-) Auslaufbereich 34 des Förderers 30 übernehmen und abtransportieren.

Der Auslaufförderer 26 kann bspw. mehrere Transportelemente 28 aufweisen. Mittels der Transportelemente 28 können die Objekte 12 transportiert werden. Im Einzelnen können die Transportelemente 28 den Auslaufstrom der Objekte 12 von dem Auslaufbereich 34 des Förderers 30 nacheinander abtransportieren.

Die Transportelemente 28 können beispielsweise als Objekthalterungen, vorzugsweise Behälterhalterungen, ausgeführt sein. Vorzugsweise können die Transportelemente 28 jeweils eine Stützplatte aufweisen, auf der ein Objekt 12 aufrecht stehen kann. Alternativ oder zusätzlich können die Transportelemente 28 bspw. eine Klammer oder einen Greifer aufweisen, die/der ein Objekt 12 an dessen Mantel, Hals und/oder Halsring halten kann.

Die Transportelemente 28 sind zum Transportieren der Objekte 12 bewegbar. Besonders bevorzugt ist der Auslaufförderer 26 als ein Rundläufer-Förderer ausgebildet. Die Transportelemente 28 können entlang einer Kreisbahn des Rundläufer-Förderers zum Transportieren der Objekte 12 bewegt werden.

Es ist bevorzugt, dass der Auslaufförderer 26 selbst ein Teil einer Objektbehandlungsvorrichtung zum Behandeln der Objekte 12 ist. Beispielsweise kann die Objektbehandlungsvorrichtung die bevorzugt als Behälter ausgeführten Objekte 12 füllen, verschließen oder dekorieren (z. B. etikettieren), während sie die Objekte 12 mittels der Transportelemente 28 transportiert.

Beispielsweise kann die Objektbehandlungsvorrichtung als eine Füllvorrichtung zum Füllen der Objekte 12 ausgebildet sein. Die Füllvorrichtung kann den Auslaufförderer 26 aufweisen. Die Füllvorrichtung kann die Objekte (z. B. Behälter) 12 füllen, vorzugsweise mit einem flüssigen oder pastösen Medium. Die Füllvorrichtung ist vorzugsweise als eine Rundläufer-Füllvorrichtung ausgeführt. Die Füllvorrichtung kann mehrere Füllventile zum gleichzeitigen bzw. zeitlich überlappenden Befüllen mehrerer Objekte 12 aufweisen. Bspw. können die Füllventile um einen Umfang eines Füllerkarussells der Rundläufer-Füllvorrichtung angeordnet sein.

Alternativ kann die Objektbehandlungsvorrichtung beispielsweise eine Verschließvorrichtung zum Verschließen der Objekte 12 sein. Die Verschließvorrichtung kann den Auslaufförderer 26 aufweisen. Die Verschließvorrichtung kann die Objekte (z. B. Behälter) 12 verschließen, z. B. mit einem Deckel, einem Korken, einem Kronkorken oder einem Schraubverschluss. Die Verschließvorrichtung kann vorzugsweise als eine Rundläufer-Verschließvorrichtung ausgeführt sein. Die Verschließvorrichtung kann mehrere Verschließstationen zum gleichzeitigen bzw. zeitlich überlappenden Verschließen mehrerer Objekte 12 aufweisen. Bspw. können die Verschließstationen um einen Umfang eines Verschließerkarussells der Rundläufer-Verschließvorrichtung angeordnet sein.

Alternativ kann die Objektbehandlungsvorrichtung beispielsweise eine Etikettiervorrichtung zum Etikettieren der Objekte 12 sein. Die Etikettiervorrichtung kann den Auslaufförderer 26 aufweisen. Die Etikettiervorrichtung kann die Objekte (z. B. Behälter) 12 etikettieren, z. B. mit Selbstklebeetiketten, Kaltleimetiketten oder Rollenetiketten. Die Etikettiervorrichtung kann vorzugsweise als eine Rundläufer-Etikettiervorrichtung ausgeführt sein. Bei der Etikettiervorrichtung können die Transportelemente 28 beispielsweise als drehbare Objektaufnahmen (z. B. Objektdrehteller) für die Objekte 12 ausgeführt sein, die um einen Umfang eines Etikettiererkarussells der Rundläufer-Etikettiervorrichtung angeordnet sind. Die Transportelemente 28 mit den darin oder daran aufgenommenen Objekten 12 können an mindestens einem Etikettieraggregat der Etikettiervorrichtung vorbeibewegt werden. Das mindestens eine Etikettieraggregat kann bspw. an einer Peripherie der Rundläufer-Etikettiervorrichtung angeordnet sein.

Bevorzugt sind zueinander beanachbarte Transportelemente 28 jeweils in einem vorbestimmten festen (Teilungs-) Abstand zueinander angeordnet.

Der Förderer 30 kann die Objekte 12 von seinem Einlaufbereich 32 zu seinem Auslaufbereich 34 transportieren. Im Einlaufbereich 32 kann der Förderer 30 die Objekte 12 von dem Einlaufförderer 14 übernehmen. Im Auslaufbereich 34 kann der Förderer 30 die Objekte 12 an den Auslaufförderer 26 übergeben. Bevorzugt kann der Förderer 30 als ein Transportstern ausgeführt sein, der die Objekte 12 auf einem kreisförmigen Pfad transportieren kann.

Der Förderer 30 weist mehrere Magnetkraftsegmente 36 und mehrere Bewegungseinrichtungen 38 auf. Optional kann der Förderer 30 bspw. noch eine Abstützplatte 54 und/oder ein Seitenführungselement 56 aufweisen (siehe Figuren 2 und 3).

Die Magnetkraftsegmente 36 sind nebeneinander auf einer geschlossenen (Bahn-) Kurve angeordnet. Die Bahnkurve bzw. die Anordnung der Magnetkraftsegmente 36 kann bspw. kreisringförmig sein, wie in Figur 1 beispielhaft dargestellt ist. Alternativ kann die Bahnkurve bzw. die Anordnung der Magnetkraftsegmente 36 bspw. oval sein.

Bevorzugt sind die Magnetkraftsegmente 36 alle auf gleicher Höhe angeordnet. Die Bahnkurve kann vorzugsweise in einer Horizontalebene liegen.

Beispielsweise weisen die Magnetkraftsegmente 36 jeweils einen oder mehrere Magnete, z. B. Permanent- oder Elektromagnete, auf. Bevorzugt sind die Magnetkraftsegmente 36 stationär bzw. ortsfest.

Vorzugsweise sind die Magnetkraftsegmente 36 bzw. deren Magnete bezüglich der geschlossenen Bahnkurve nach außen gewandt.

Die Bewegungseinrichtungen 38 dienen zum Transportieren der Objekte 12. Die Bewegungseinrichtungen 38 können auch als Mover oder Shuttle bezeichnet werden. Bevorzugt können die Objekte 12 jeweils einzeln von einer der Bewegungseinrichtungen 38 transportiert werden. Alternativ können bspw. mehrere Objekte 12 je Bewegungseinrichtung 38 transportiert werden, oder mehrere Bewegungseinrichtungen 38 transportieren jeweils ein Objekt 12 gemeinsam, z. B. gehalten zwischen den mehreren Bewegungseinrichtungen 38.

Die Bewegungseinrichtungen 38 weisen jeweils eine Magnetkrafteinheit 40 und einen Objekthalter 44 zum Halten (mindestens) eines Objekts 12 beim Transportieren auf. Optional können die Bewegungseinrichtungen 38 jeweils eine Verbindungskonstruktion 46 aufweisen.

Die Magnetkrafteinheiten 40 dienen zum magnetischen Wechselwirken mit den mehreren Magnetkraftsegmenten 36 zum Antreiben der jeweiligen Bewegungseinrichtung 38.

Beispielsweise weisen die Magnetkrafteinheiten 40 jeweils einen oder mehrere Magnete, z. B. Permanent- oder Elektromagnete, auf. Bevorzugt können die Magnetkrafteinheiten 40 bzw. deren Magnete in einem Gehäuse 42 der jeweiligen Bewegungseinrichtung 38 teilweise oder vollständig aufgenommen sein.

Die Magnetkrafteinheiten 40 sind außenliegend zu den Magnetkraftsegmenten 36 bzw. zu der geschlossenen Bahnkurve, auf der die Magnetkraftsegmente 36 angeordnet sind, angeordnet. Die Magnetkrafteinheiten 40 sind zum Bewegen auf einem umlaufenden Antriebspfad A angeordnet. Der Antriebspfad A ist entsprechend außenliegend von der geschlossenen Bahnkurve, auf der die Magnetkraftsegmente 36 angeordnet sind, bzw. außenliegend von den Magnetkraftsegmenten 36 angeordnet.

Beispielsweise können die Magnetkrafteinheiten 40 bzw. deren Magnete hin zu der geschlossenen Bahnkurve, auf der die Magnetkraftsegmente 36 angeordnet sind, gewandt sein. Die Magnetkraftsegmente 36 und die Magnetkrafteinheiten 40 können einander direkt gegenüberliegen.

Bevorzugt sind die Magnetkrafteinheiten 40 unabhängig voneinander bzw. individuell mittels der Magnetkraftsegmente 36 antreibbar. Die Bewegungseinrichtungen 38 können entsprechend unabhängig voneinander bewegbar und individuell magnetisch antreibbar sein.

Beispielsweise können die Bewegungseinrichtungen 38 mittels eines Langstator-Linearmotor-Antriebssystems, eines Kurzstator-Linearmotor-Antriebssystems oder eines Planarmotor-Antriebssystems der Vorrichtung 10 bzw. des Förderers 30 angetrieben sein. D.h., die Magnetkrafteinheiten 40 und die Magnetkraftsegmente 36 können gemeinsam ein Langstator-Linearmotor-Antriebssystem oder ein Kurzstator-Linearmotor-Antriebssystem oder ein Planarmotor-Antriebssystem bilden.

Besonders bevorzugt ist der Förderer 30 als ein Langstator-Linearmotor-Förderer ausgebildet. Die Magnetkraftsegmente 36 können als Langstatorsegemente ausgeführt sein. Gemeinsam können die Langstatorsegemente einen, vorzugsweise (z. B. kreis-) ringförmigen oder ovalen, Langstator bilden. Die Langstatorsegemente können jeweils Elektromagnete zum Bewirken einer Bewegung bzw. eines Antriebs der mit Permanentmagneten ausgestatteten Magnetkrafteinheiten 40 aufweisen.

Es ist allerdings bspw. auch möglich, dass der Förderer 30 ein Kurzstator-Linearmotor-Förderer oder ein Planarmotor-Förderer ist.

Beim Kurzstator-Linearmotor-Förderer können die Magnetkraftsegmente 36 und die Magnetkrafteinheiten 40 gemeinsam ein Kurzstator-Linearmotor-Antriebssystem bilden. Die Magnetkrafteinheiten 40 können Elektromagnete zum Bilden eines Kurzstators aufweisen, der zum Antreiben der jeweilige Bewegungseinrichtung 38 in magnetische Wechselwirkung mit ortsfesten Permanentmagneten der Magnetkraftsegmente 36 treten kann.

Der Planarmotor-Förderer kann die Bewegungseinrichtungen 38 mit mindestens zwei Freiheitgraden (Umfangsrichtung und z-Richtung) über eine bevorzugt geschlossene Antriebsfläche eines Stators aus den Magnetkraftsegmenten 36 bewegen (nicht in Figur 1 dargestellt). Die Magnetkraftsegmente 36 und die Magnetkrafteinheiten 40 können gemeinsam ein Planarmotor-Antriebssystem bilden. Der Stator aus den Magnetkraftsegmenten 36 kann auch als Plattform oder Grundelement bezeichnet werden. Es ist auch möglich, dass zusätzlich eine Hubbewegung und/oder eine Neigebewegung der Bewegungseinrichtungen 38 relativ zu dem Stator / Grundelement mittels der magnetischen Wechselwirkung steuerbar ist. Das Grundelement kann bevorzugt in Kacheln segmentiert sein. Der Stator bzw. die Magnetkraftsegmente 36 können bspw. durch bewegbare, z. B. drehbare, Permanentmagnete oder durch ortsfeste Elektromagnete gebildet sein. Die Magnetkrafteinheiten 40 weisen vorzugsweise Permanentmagnete auf.

Die Objekthalter 44 können aktiv oder passiv sein.

Bevorzugt weist ein Objekthalter 44 mindestens eine Objekttasche (Objektaufnahme oder Objektschale) auf, die das Objekt 12 im Kontakt mit einem Hals und/oder Mantel (Rumpf) des Objekts 12 kontaktieren kann. Das Objekt 12 kann zumindest teilweise in der Objekttasche, vorzugsweise Behältertasche, aufgenommen sein. Beispielsweise kann das Objekt 12 mittels der Objekttasche beim Bewegen der jeweiligen Bewegungseinrichtung 38 geschoben und somit transportiert werden. Alternativ kann der Objekthalter 44 bspw. eine Stützplatte aufweisen, auf der ein Objekt 12 aufrecht stehen kann. Alternativ oder zusätzlich kann der Objekthalter 44 eine Klammer oder einen Greifer aufweisen, die/der ein Objekt 12 an dessen Mantel, Hals und/oder Halsring halten kann.

Die Objekthalter 44 sind so angeordnet, dass sie die gehaltenen Objekte 12 auf einem Transportpfad T transportieren, der innenliegend von dem umlaufenden Antriebspfad A ist.

Beispielsweise können die Objekthalter 44 jeweils innenliegend von dem umlaufenden Antriebspfad A, der geschlossenen Bahnkurve, dem Transportpfad T, den Magnetkrafteinheiten 40 und/oder den Magnetkraftsegmenten 36 angeordnet sein.

Bevorzugt können die Objekthalter 44 zum Halten der Objekte 12 nach außen gewandt sein. In einer Draufsicht auf die Vorrichtung 10 können die Objekte 12 bevorzugt zwischen dem, vorzugsweise innenliegenden, Objekthalter 44 der jeweiligen Bewegungseinrichtung 38 und der, vorzugsweise außenliegenden, Magnetkrafteinheit 40 der jeweiligen Bewegungseinrichtung 38 positioniert sein.

Vorzugsweise sind die Objekthalter 44 höhenversetzt zu den Magnetkrafteinheiten 40 und den Magnetkraftsegmenten 36 angeordnet. Beispielsweise können die Objekthalter 44 oberhalb oder unterhalb von den Magnetkrafteinheiten 40 und den Magnetkraftsegmente 36 angeordnet sein. Entsprechend kann der Transportpfad T höhenversetzt zu dem umlaufenden Antriebspfad A angeordnet sein, z. B. darüber oder darunter. Im dargestellten Ausführungsbeispiel der Figuren 2 bis 6 sind die Objekthalter 44 bspw. oberhalb der Magnetkrafteinheiten 40 und der Magnetkraftsegmente 36 angeordnet, womit der Transportpfad T ebenfalls oberhalb von dem Antriebspfad A angeordnet ist.

Die Verbindungskonstruktion 46 kann den Objekthalter 44 der jeweiligen Bewegungseinrichtung 38 und die Magnetkrafteinheit 40 der jeweiligen Bewegungseinrichtung 38 miteinander verbinden. Bevorzugt ist die Verbindungskonstruktion 46 starr. Vorzugsweise kann die Verbindungskonstruktion 46 eine Bewegung der Magnetkrafteinheit 40 auf den Objekthalter 44 übertragen.

Beispielweise kann ein oberes Ende der Verbindungskonstruktion 46 direkt mit dem Objekthalter 44 verbunden sein, und ein unteres Ende der Verbindungskonstruktion 46 kann direkt mit der Magnetkrafteinheit 40 und/oder dem Gehäuse 42 verbunden sein, oder umgekehrt.

Bevorzugt kann der Objekthalter 44 zum Austauschen lösbar an der Verbindungskonstruktion 46, z. B. an einem oberen Endbereich der Verbindungskonstruktion 46, angebracht sein, z. B. über eine Schraub-, Steck- und/oder Klemmverbindung.

Besonders bevorzugt ist der Objekthalter 44 höhenverstellbar (z. B. vertikal verschiebbar) mit der Verbindungskonstruktion 46 verbunden. Beispielsweise kann die Verbindungskonstruktion 46, z. B. ein oberer Endbereich der Verbindungskonstruktion 46, über eine Vertikalführung und/oder über eine Schwalbenschwanzverbindung mit dem Objekthalter 44 verbunden sein. Vorzugsweise kann der Objekthalter 44 in unterschiedlichen Höhenpositionen an der Verbindungskonstruktion 46 befestigt werden, bevorzugt stufenlos.

Bevorzugt kann das Gehäuse 42 und/oder die Magnetkrafteinheit 40 zum Austauschen lösbar an der Verbindungskonstruktion 46, z. B. an einem unteren Endbereich der Verbindungskonstruktion 46, angebracht sein, z. B. über eine Schraub-, Steck- und/oder Klemmverbindung.

Bevorzugt ist die Magnetkrafteinheit 40, z. B. über das Gehäuse 42, höhenverstellbar (z. B. vertikal verschiebbar) mit der Verbindungskonstruktion 46 verbunden. Beispielsweise kann die Verbindungskonstruktion 46, z. B. ein unterer Endbereich der Verbindungskonstruktion 46, über eine Vertikalführung und/oder über eine Schwalbenschwanzverbindung mit der Magnetkrafteinheit 40 und/oder dem Gehäuse 42 verbunden sein. Vorzugsweise kann die Magnetkrafteinheit 40 in unterschiedlichen Höhenpositionen an der Verbindungskonstruktion 46 befestigt werden, bevorzugt stufenlos.

Beispielsweise kann die Verbindungskonstruktion 46 einen länglichen Träger 48 und einen Ausleger 50 aufweisen (siehe z. B. Figuren 3 bis 6).

Der längliche Träger 48 kann bpsw. stab-, stangen-, balken- oder leistenförmig sein. Bevorzugt ist der längliche Träger 48 ein Vertikalträger. Der Träger 48 kann vorzugsweise innenliegend von dem Objekthalter 44 bzw. dem Transportpfad T angeordnet sein. Bevorzugt kann der Träger 48 einen oberen Endbereich aufweisen, an dem der Objekthalter 44 lösbar angebracht ist, z. B. über eine Vertikalführung und/oder eine Schwalbenschwanzverbindung, oder einfach miteinander verschraubt.

Der Ausleger 50 kann vorzugsweise direkt unterhalb von dem Objekthalter 44 der jeweiligen Bewegungseinrichtung 38 angeordnet sein. Beispielsweise kann sich der Ausleger 50 ausgehend von dem Träger 48 erstrecken, z. B. radial nach außen und/oder hin zu dem Gehäuse 42 und/oder der Magnetkrafteinheit 40 der jeweiligen Bewegungseinrichtung 38.

Der Ausleger 50 kann den Träger 48 und die Magnetkrafteinheit 40 verbinden, z. B. über das Gehäuse 42. Bevorzugt kann das Gehäuse 42 und/oder die Magnetkrafteinheit 40 an einem Auslegerende des Auslegers 50 angeordnet sein. Bevorzugt kann das Gehäuse 42 und/oder die Magnetkrafteinheit 40 an dem Auslegerende lösbar angebracht sein, z. B. über eine Vertikalführung und/oder eine Schwalbenschwanzverbindung, oder miteinander verschraubt, oder verschweißt.

Vorzugsweise kann der Ausleger 50 das Gehäuse 42 und/oder die Magnetkrafteinheit 40 an dem Träger 48 tragen. Zumindest kann der Ausleger 50 eine Bewegung der Magnetkrafteinheit 40 auf den Träger 48 und damit auf den Objekthalter 44 übertragen.

Vorzugsweise kann die Verbindungskonstruktion 46 zumindest abschnittsweise als Fachwerk ausgeführt sein. Beispielsweise kann der Ausleger 50 in einer Fachwerkbauweise ausgeführt sein.

Bevorzugt sind die Verbindungskonstruktionen 46 oberhalb von den Magnetkraftsegmenten 36 angeordnet. Beispielsweise können die Träger 48 und/oder die Ausleger 50 oberhalb von den Magnetkraftsegmenten 36 angeordnet sein, vorzugsweise direkt oberhalb der Magnetkraftsegmente 36.

Es ist möglich, dass die Bewegungseinrichtungen 38 an einer zentralen Führungssäule 52 geführt und optional getragen sind (siehe z. B. Figuren 2 und 3). Die Führungssäule 52 kann bspw. zentral innenliegend von dem Transportpfad T und/oder dem Antriebspfad A sein.

Beispielsweise können die Bewegungseinrichtungen 38 über die Verbindungskonstruktionen 46 an der Führungssäule 52 geführt und getragen sein. Bevorzugt können die Verbindungskonstruktionen 46 drehbar mit der Führungssäule 52 verbunden sein, z. B. über die Träger 48.

Die an der zentralen Führungssäule 52 geführten Bewegungseinrichtungen 38 sind bevorzugt rollenlos. Alternativ ist es bspw. möglich, dass die mehreren Bewegungseinrichtungen 38 jeweils mindestens eine Führungsrolle aufweisen, die die jeweilige Bewegungseinrichtung 38 entlang einer umlaufenden Führungsbahn führt und optional trägt (nicht dargestellt). Die mindestens eine Führungsrolle kann bspw. an der Verbindungskonstruktion 46 und/oder an dem Gehäuse 42 und/oder an dem Objekthalter 44 angeordnet sein.

Die Abstützplatte 54 kann zum bodenseitigen Abstützen der von den Objekthaltern 44 gehaltenen Objekte 12 dienen (siehe Figuren 2 und 3). Beispielsweise können die Objekte 12 während des Transportierens mittels der Objekthalter 44 der Bewegungseinrichtungen 38 über die gekrümmte Abstützplatte 54 geschoben werden.

Vorzugsweise kann die Abstützplatte 54 einen gekrümmten Verlauf aufweisen, der dem Transportpfad T folgt. Bevorzugt kann die Abstützplatte 54 direkt unterhalb von dem Transportpfad T angeordnet sein. Beispielsweise kann die Abstützplatte 54 zwischen den Objekthaltern 44 und den Magnetkraftsegmenten 36 angeordnet sein.

Das Seitenführungselement 56 kann zum seitlichen Führen der von den Objekthaltern 44 gehaltenen Objekte 12 auf dem Transportpfad T dienen (siehe Figuren 2 und 3). Beispielsweise können die Objekte 12 während des Transportierens mittels der Objekthalter 44 der Bewegungseinrichtungen 38 entlang des Seitenführungselements 56 geschoben werden.

Beispielsweise kann das Seitenführungselement 56 ein Seitengeländer oder eine Seitenwand sein. Vorzugsweise kann das Seitenführungselement 56 außenliegend von den Objekthaltern 44 und/oder dem Transportpfad T angeordnet sein. Beispielsweise kann das Seitenführungselement 56 einen gekrümmten Verlauf aufweisen, der dem Transportpfad T folgt.

Die Sperreinrichtung 58 ist nur beispielhaft in Figur 1 dargestellt. Die Sperreinrichtung 58 kann betätigt werden, um den Einlaufstrom der Objekte 12 wahlweise zu blockieren oder freizugeben. Ein freigegebener Einlaufstrom kann in den Förderer 30 einlaufen, sodass die Objekte 12 von den Bewegungseinrichtungen 38 übernommen werden können. Der Einlaufstrom kann von der Sperreinrichtung 58 vor dem Einlaufen in den Förderer 30 blockiert werden, sodass keine Objekte 12 von den Bewegungseinrichtungen 38 übernommen werden. Die Objekte 12 des Einlaufstroms können dann stattdessen aufgestaut werden. Die Sperreinrichtung 58 kann bspw. mittels der Verarbeitungseinrichtung 60 betrieben werden.

Vorzugsweise kann die Sperreinrichtung 58 in dem Einlaufbereich 32 und/oder an einem Endbereich des Einlaufförderers 14 angeordnet sein. Beispielsweise kann die Sperreinrichtung 58 so angeordnet sein, dass sie die Objekte 12 blockieren kann, während sie auf/an dem Einlaufförderer 14 positioniert sind bzw. von diesem transportiert werden. Es ist auch möglich, dass eine alternative oder zusätzliche Sperre weiter objektstromaufwärts angeordnet sein kann (z. B. um zumindest Teilfunktionen zu erfüllen). Die Funktion könnte evtl. auch durch einen seitlichen Überschub realisiert werden.

Die Sperreinrichtung 58 kann zum Blockieren des Einlaufstroms bspw. dann betätigt werden, wenn ein Fehler beim Transportieren, eine Fehlfunktion einer der mehreren Bewegungseinrichtungen 38, eine Fehlfunktion einer der mehreren Magnetkraftsegmente 36, eine Beschädigung eines Objekts 12, eine entsprechende Bedienereingabe und/oder eine Fehlfunktion einer objektstromabwärts von dem Förderer 30 angeordneten Einrichtung (z. B. Füllvorrichtung, Verschließvorrichtung oder Etikettiervorrichtung) zum Behandeln und/oder Transportieren der Objekte 12 erkannt oder erfasst wird.

Die Sperreinrichtung 58 kann beispielsweise ein bewegbares (mechanisches) Sperrelement zum Blockieren der Objekte 12 aufweisen. Das Sperrelement kann beispielsweise ein Sperrfinger, ein Sperrstift oder eine Sperrschranke sein.

Das Sperrelement kann beispielsweise zwischen einer Blockierstellung und einer Freigabestellung bewegbar sein. In der Blockierstellung können die Objekte 12 blockiert werden. In der Blockierstellung kann das Sperrelement als ein Anschlag für ein (vorderstes) Objekt 12 dienen. In der Freigabestellung können die Objekte 12 zum Transportieren und Einlaufen in den Förderer 30 freigegeben sein.

Bevorzugt kann das Sperrelement mittels eines Aktors der Sperreinrichtung 58 bewegt werden. Der Aktor kann beispielsweise ein mechanischer, pneumatischer, hydraulischer, elektrischer oder elektromagnetischer Aktor sein. Die Bewegbarkeit des Sperrelements kann beispielsweise in einer Ein- und Ausfahrbarkeit und/oder in einer Verschwenkbarkeit bestehen. Denkbar ist auch eine im Sperrelement integrierte Dämpfung. Der Aktor kann bspw. von der Verarbeitungseinrichtung 60 betrieben werden.

Die Verarbeitungseinrichtung 60 ist nur beispielhaft in Figur 1 dargestellt. Die Verarbeitungseinrichtung 60 kann dazu konfiguriert sein, die Vorrichtung 10 zu betreiben.

Beispielsweise kann die Verarbeitungseinrichtung 60 in Signalverbindung mit dem Einlaufförderer 14, der Sensorvorrichtung 24, dem Auslaufförderer 26, dem Förderer 30, den Magnetkraftsegmenten 36, den Magnetkrafteinheiten 40 und/oder der Sperreinrichtung 58 sein.

Bevorzugt kann die Verarbeitungseinrichtung 60 die Magnetkraftsegmente 36 und/oder die Magnetkrafteinheiten 40 derart betreiben, dass mit den Objekthaltern 44 der mehreren Bewegungseinrichtungen 38 ein lückenloser oder annähernd lückenloser Objekteinlaufstrom im Einlaufbereich 32 übernommen werden kann. Optional können die Bewegungseinrichtungen 38 einen Abstand benachbarter, transportierter Objekte 12 von dem Einlaufbereich 32 zu dem Auslaufbereich 34 vergrößern, vorzugsweise auf einen vorgegebenen Objektabstand, der einem Teilungsabstand des Auslaufförderers 26 entspricht. Die Bewegungseinrichtungen 38 können die Objekte 12 dann in dem Teilungsabstand des Auslaufförderers 26 an dessen Transportelemente 28 übergeben.

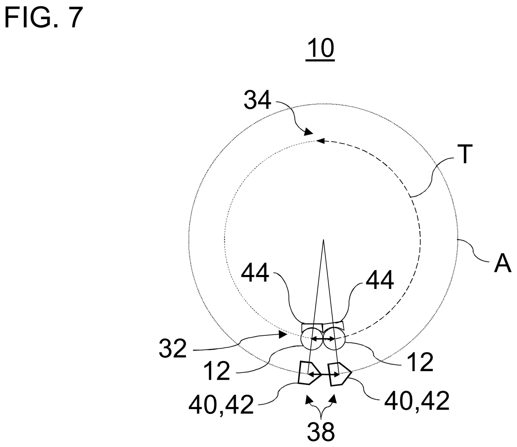

Die Figur 7 zeigt schematisch, wie sich die Anordnung des Transportpfads T innenliegend von dem Antriebspfad A vorteilhaft auswirken kann.

Benachbarte Magnetkrafteinheiten 40 (und damit die zugehörigen Bewegungseinrichtungen 38) können so dicht zusammengefahren werden, dass die Objekthalter 44 und/oder die von den Objekthaltern 44 gehaltenen Objekte 12 einander berühren. In diesem Zustand berühren sich die Gehäuse 42, in denen die Magnetkrafteinheiten 40 aufgenommen sind, bevorzugt noch nicht.

Das nahe Zusammenfahren im Bereich der Objekthalter 44 und der Objekte 12 kann letztlich ermöglichen, dass die Objekte 12 von den Objekthaltern 44 aus dem im Wesentlichen oder annähernd lückenlosen Einlaufstrom von dem Einlaufförderer 14 übernommen werden können.

Entsprechend können hierfür die Objekthalter 44 und die Gehäuse 42, in denen die Magnetkrafteinheiten 40 aufgenommen sind, derart dimensioniert sein, dass beim Zusammenfahren die Objekthalter 44 und/oder die Objekte 12 einander berühren, während die Gehäuse 42 noch voneinander beabstandet sind.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Magnetkraftsegmente, der Bewegungseinrichtungen, der Objekthalter und/oder der Magnetkrafteinheiten des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zum Transportieren
- 12: Objekt
- 14: Einlaufförderer
- 16: Förderelement
- 18: Gestell
- 20: Umlenkrad
- 22: Ausnehmung
- 24: Sensorvorrichtung
- 26: Auslaufförderer
- 28: Transportelement
- 30: Förderer
- 32: Einlaufbereich
- 34: Auslaufbereich
- 36: Magnetkraftsegment
- 38: Bewegungseinrichtung
- 40: Magnetkrafteinheit
- 42: Gehäuse
- 44: Objekthalter
- 46: Verbindungskonstruktion
- 48: länglicher Träger
- 50: Ausleger
- 52: Führungssäule
- 54: Abstützplatte
- 56: Seitenführungselement
- 58: Sperreinrichtung
- 60: Verarbeitungseinrichtung

- A: Antriebspfad
- T: Transportpfad

## Patentansprüche

1. Vorrichtung (10), vorzugsweise Transportstern, zum Transportieren von Objekten (12), vorzugsweise Behältern, wobei die Vorrichtung (10) aufweist:
mehrere Magnetkraftsegmente (36), vorzugsweise Langstatorsegmente, wobei die mehreren Magnetkraftsegmente (36) nebeneinander auf einer geschlossenen, vorzugsweise ringförmigen oder ovalen, Bahnkurve angeordnet sind;
mehrere Bewegungseinrichtungen (38), die jeweils aufweisen:
- einen Objekthalter (44) zum Halten eines Objekts (12); und
- eine Magnetkrafteinheit (40) zum magnetischen Wechselwirken mit den mehreren Magnetkraftsegmenten (36) zum Antreiben der jeweiligen Bewegungseinrichtung (38),
wobei:
- die Magnetkrafteinheiten (40) jeweils außenliegend zu der geschlossenen Bahnkurve zum Bewegen auf einem umlaufenden Antriebspfad (A) angeordnet sind; und
- die Objekthalter (44) jeweils angeordnet sind zum Transportieren der gehaltenen Objekte (12) auf einem Transportpfad (T) innenliegend von dem umlaufenden Antriebspfad (A).

2. Vorrichtung (10) nach Anspruch 1, wobei:
die mehreren Magnetkrafteinheiten (40) unabhängig voneinander mittels der mehreren Magnetkraftsegmente (36) antreibbar sind,
wobei vorzugsweise:
die mehreren Magnetkrafteinheiten (40) und die mehreren Magnetkraftsegmente (36) gemeinsam ein Langstator-Linearmotor-Antriebssystem oder ein Kurzstator-Linearmotor-Antriebssystem oder ein Planarmotor-Antriebssystem bilden.

3. Vorrichtung (10) nach Anspruch 1 oder Anspruch 2, wobei:
die Objekthalter (44) jeweils innenliegend von mindestens einem von dem umlaufenden Antriebspfad (A), der geschlossenen Bahnkurve, dem Transportpfad (T), den mehreren Magnetkrafteinheiten (40) und den mehreren Magnetkraftsegmenten (36) angeordnet sind;
und optional:
die Objekthalter (44) zum Halten der Objekte (12) nach außen gewandt sind; und/oder
die Objekthalter (44) Behälterhalter sind, vorzugsweise zum Halten jeweils eines Behälters an einem Behälterhals des Behälters und/oder an einem Behälterrumpf des Behälters.

4. Vorrichtung (10) nach einem der vorherigen Ansprüche, wobei mindestens eines erfüllt ist von:
die Objekthalter (44) sind höhenversetzt zu, vorzugsweise oberhalb oder unterhalb von, den Magnetkrafteinheiten (40) und/oder den mehreren Magnetkraftsegmenten (36) angeordnet; und
der Transportpfad (T) ist höhenversetzt zu, vorzugsweise oberhalb oder unterhalb von, dem umlaufenden Antriebspfad (A) angeordnet.

5. Vorrichtung (10) nach einem der vorherigen Ansprüche, wobei:
die mehreren Bewegungseinrichtungen (38) jeweils eine Verbindungskonstruktion (46) aufweisen, die den Objekthalter (44) der jeweiligen Bewegungseinrichtung (38) und die Magnetkrafteinheit (40) der jeweiligen Bewegungseinrichtung (38) miteinander verbindet.

6. Vorrichtung (10) nach Anspruch 5, wobei mindestens eines erfüllt ist von:
die Verbindungskonstruktion (46) ist zumindest abschnittsweise als Fachwerk ausgeführt;
der Objekthalter (44) und/oder die Magnetkrafteinheit (40) ist zum Austauschen lösbar an der Verbindungskonstruktion (46) angebracht;
der Objekthalter (44) und/oder die Magnetkrafteinheit (40) ist höhenverstellbar mit der Verbindungskonstruktion (46) verbunden, vorzugsweise über eine Vertikalführung und/oder eine Schwalbenschwanzverbindung;
die Magnetkrafteinheit (40) ist an einem von einem unteren Ende und einem oberen Ende der Verbindungskonstruktion (46) angeordnet und der Objekthalter (44) ist an dem anderen von dem unteren Ende und dem oberen Ende der Verbindungskonstruktion (46) angeordnet;
die Verbindungskonstruktion (46) ist mit einer zentralen Führungssäule (52) verbunden, vorzugsweise zum Führen und optional Tragen der jeweiligen Bewegungseinrichtung (38) an der zentralen Führungssäule (52).

7. Vorrichtung (10) nach Anspruch 5 oder Anspruch 6, wobei die Verbindungskonstruktion (46) aufweist:
einen länglichen Träger (48), vorzugsweise Vertikalträger, wobei der längliche Träger (48) innenliegend von dem Transportpfad (T) angeordnet ist und den Objekthalter (44) trägt; und
einen Ausleger (50), der den länglichen Träger (48) und die Magnetkrafteinheit (40) verbindet und optional die Magnetkrafteinheit (40) an dem länglichen Träger (48) trägt.

8. Vorrichtung (10) nach einem der vorherigen Ansprüche, ferner aufweisend mindestens eines von:
eine, vorzugsweise stationäre, Abstützplatte (54) zum bodenseitigen Abstützen der von den Objekthaltern (44) gehaltenen Objekte (12), wobei vorzugsweise mindestens eines erfüllt ist von:
- die Abstützplatte (54) ist zwischen den Objekthaltern (44) und den Magnetkraftsegmenten (36) angeordnet; und
- die Abstützplatte (54) weist einen gekrümmten Verlauf auf, der dem Transportpfad (T) folgt; und
ein Seitenführungselement (56), vorzugsweise Seitengeländer oder Seitenwand, zum seitlichen Führen der von den Objekthaltern (44) gehaltenen Objekte (12) auf dem Transportpfad (T), wobei vorzugsweise mindestens eines erfüllt ist von:
- das Seitenführungselement (56) ist außenliegend von den Objekthaltern (44) und/oder dem Transportpfad (T) angeordnet; und
- das Seitenführungselement (56) weist einen gekrümmten Verlauf auf, der dem Transportpfad (T) folgt.

9. Vorrichtung (10) nach einem der vorherigen Ansprüche, ferner aufweisend:
einen Einlaufförderer (14), der zum Übergeben der Objekte (12) an die mehreren Bewegungseinrichtungen (38) angeordnet ist,
wobei:
der Einlaufförderer (14) ein Gestell (18) mit einer Ausnehmung (22) aufweist, wobei
- die Ausnehmung (22) einen Teil der Magnetkraftsegmente (36) überspannt, und/oder
- Abschnitte der Bewegungseinrichtungen (38) im Betrieb der Vorrichtung (10) durch die Ausnehmung (22) bewegbar sind.

10. Vorrichtung (10) nach einem der vorherigen Ansprüche, wobei:
die Magnetkrafteinheiten (40) in einem Gehäuse (42) der jeweiligen Bewegungseinrichtung (38) aufgenommen sind; und
die Objekthalter (44) und die Gehäuse (42) derart dimensioniert sind, dass bei einem Zusammenfahren benachbarter Bewegungseinrichtungen (38) die Objekthalter (44) und/oder die Objekte (12) einander berühren, während die Gehäuse (42) noch voneinander beabstandet sind.

11. Vorrichtung (10) nach einem der vorherigen Ansprüche, wobei:
die mehreren Bewegungseinrichtungen (38) rollenlos sind und/oder an einer zentralen Führungssäule (52) der Vorrichtung (10) geführt und optional getragen sind; oder
die mehreren Bewegungseinrichtungen (38) jeweils mindestens eine Führungsrolle aufweisen, die die jeweilige Bewegungseinrichtung (38) entlang einer umlaufenden Führungsbahn führt und optional trägt.

12. Vorrichtung (10) nach einem der vorherigen Ansprüche, ferner aufweisend:
eine Sperreinrichtung (58), die in einem Einlaufbereich (32) der Vorrichtung (10) angeordnet und wahlweise zum Blockieren oder Freigeben eines Objekteinlaufstroms betätigbar ist,
wobei vorzugsweise:
die Sperreinrichtung (58) ein bewegbares Sperrelement zum Blockieren der Objekte (12) des Objekteinlaufstroms aufweist.

13. Vorrichtung (10) nach einem der vorherigen Ansprüche, ferner aufweisend:
eine Verarbeitungseinrichtung (60), die dazu konfiguriert ist, die mehreren Magnetkraftsegmente (36) und/oder Magnetkrafteinheiten (40) derart zu betreiben, dass:
- mit den Objekthaltern (44) der mehreren Bewegungseinrichtungen (38) ein lückenloser oder annähernd lückenloser Objekteinlaufstrom übernehmbar ist, und optional
- die Bewegungseinrichtungen (38) einen Abstand benachbarter, transportierter Objekte (12) von einem Einlaufbereich (32) zu einem Auslaufbereich (34) der Vorrichtung (10) vergrößern oder verkleinern, vorzugsweise auf einen vorgegebenen Objektabstand.

14. Verfahren zum Transportieren von Objekten (12), vorzugsweise Behältern und/oder mittels einer Vorrichtung (10) nach einem der vorherigen Ansprüche, wobei das Verfahren aufweist:
Transportieren der Objekte (12) auf einem Transportpfad (T) mittels Objekthaltern (44) mehrerer Bewegungseinrichtungen (38), wobei:
- der Transportpfad (T) innenliegend von einem umlaufenden Antriebspfad (A) angeordnet ist;
- Magnetkrafteinheiten (40) der mehreren Bewegungseinrichtungen (38) sich auf dem umlaufenden Antriebspfad (A) bewegen, angetrieben durch magnetische Wechselwirkung mit mehreren Magnetkraftsegmenten (36), die nebeneinander auf einer geschlossenen Bahnkurve angeordnet sind; und
- der umlaufende Antriebspfad (A) außenliegend von der geschlossenen Bahnkurve angeordnet ist.

15. Verfahren nach Anspruch 14, wobei das Verfahren ferner mindestens eines aufweist von:
Übernehmen der Objekte (12) mittels der Objekthalter (44) der mehreren Bewegungseinrichtungen (38) aus einem lückenlosen oder einem annähernd lückenlosen Objekteinlaufstrom;
Übergeben der Objekte (12) mittels der Objekthalter (44) der mehreren Bewegungseinrichtungen (38) zu einem Objektauslaufstrom, in dem benachbarte Objekte (12) beabstandet zueinander in einem vorgegebenen Objektabstand positioniert sind;
Schieben der Objekte (12) während des Transportierens mittels der Objekthalter (44) der mehreren Bewegungseinrichtungen (38) über eine, vorzugsweise gekrümmte, Abstützplatte (54) und/oder entlang eines, vorzugsweise gekrümmten, Seitenführungselements (56);
Blockieren eines Objekteinlaufstroms zu den mehreren Bewegungseinrichtungen (38) mittels einer Sperreinrichtung (58), vorzugsweise bei mindestens einem von:
- einem Fehler beim Transportieren, Übernehmen oder Übergeben;
- einer Fehlfunktion einer der mehreren Bewegungseinrichtungen (38);
- einer Fehlfunktion einer der mehreren Magnetkraftsegmente (36);
- einer Fehlfunktion einer Einrichtung zum Behandeln und/oder Transportieren der Objekte (12), die objektstromabwärts von den mehreren Bewegungseinrichtungen (38) angeordnet ist;
- einer erfassten Beschädigung eines Objekts (12); und
- einer Bedienereingabe.
